# EUROPÄISCHE PATENTSCHRIFT

(11) **EP 3 359 833 B1**
(45) Veröffentlichungstag und Bekanntmachung des Hinweises auf die Patenterteilung: **14.08.2019**
(21) Anmeldenummer: 16770884.1
(22) Anmeldetag: 05.09.2016
(51) Int. Cl.: F16D 13/58, F16D 13/38

(54) **REIBUNGSKUPPLUNG**
FRICTION CLUTCH
EMBRAYAGE À FRICTION

(30) Priorität: 05.10.2015 DE 102015219151
(43) Veröffentlichungstag der Anmeldung: 15.08.2018
(73) Patentinhaber: Schaeffler Technologies AG & Co. KG, 91074 Herzogenaurach (DE)
(72) Erfinder: RABER, Christoph, 66564 Ottweiler-Steinbach (DE)
(86) Internationale Anmeldenummer: PCT/DE2016/200416
(87) Internationale Veröffentlichungsnummer: WO 2017/059852

(56) Entgegenhaltungen:
- WO-A1-2015/127930
- DE-A1- 10 035 491
- DE-A1-102013 202 686
- DE-B3- 10 196 193
- US-A1- 2013 092 500

## Beschreibung

Die vorliegende Erfindung betrifft eine Reibungskupplung für einen Antriebsstrang eines Kraftfahrzeugs gemäß dem Oberbegriff des Patentanspruchs 1.

Aus der DE 43 11 908 A1 ist eine Reibungskupplung für einen Antriebsstrang eines Kraftfahrzeugs bekannt. Die Reibungskupplung weist eine Gegendruckplatte, einen mit der Gegendruckplatte verbundenen Kupplungsdeckel und eine bezüglich der Gegendruckplatte in axialer Richtung der Reibungskupplung begrenzt verlagerbare Anpressplatte zur reibschlüssigen Klemmung einer Kupplungsscheibe zwischen der Gegendruckplatte und der Anpressplatte auf. Am Kupplungsdeckel sind in Umfangsrichtung der Reibungskupplung verteilt angeordnete Tellerfederzentrierbolzen vorgesehen, durch die eine Tellerfeder, die in axialer Richtung zwischen der Anpressplatte und dem Kupplungsdeckel angeordnet ist, bezüglich einer Drehachse der Reibungskupplung in einer zentrierten Lage gehalten ist. An den Tellerfederzentrierbolzen sind Blattfedern vorgesehen, durch die die Anpressplatte drehfest und in axialer Richtung begrenzt verlagerbar am Kupplungsdeckel angebunden ist. Die Tellerfeder weist einen Kraftrand auf, der in radialer Richtung der Reibungskupplung über zwei außerhalb der Tellerfederzentrierbolzen angeordnete Drahtringe verkippbar am Kupplungsdeckel abgestützt ist und in radialer Richtung außerhalb der Drahtringe auf die Anpressplatte einwirkt, um bei unbetätigter Tellerfeder die Anpressplatte zur reibschlüssigen Klemmung der Kupplungsscheibe in Richtung der Gegendruckplatte zu verlagern.

In der DE 43 11 908 A1 ist die Tellerfeder durch zwei Drahtringe in axialer Richtung der Reibungskupplung in Position gehalten. Der erste Drahtring ist als kupplungsdeckelseitiger Drahtring ausgebildet und zwischen dem Kupplungsdeckel und der Tellerfeder angeordnet. Der zweite Drahtring ist als anpressplattenseitiger Drahtring ausgebildet und zwischen der Tellerfeder und zum Kupplungsdeckel weisenden Anlageflächen der Blattfedern angeordnet. Die Tellerfederzentrierbolzen sind aufseiten des Kupplungsdeckels mit dem Kupplungsdeckel vernietet und aufseiten der Anpressplatte mit den Blattfedern vernietet. Durch die Vernietung mit dem Kupplungsdeckel und im Zusammenspiel mit den Drahtringen und den Anlageflächen der Blattfedern übernehmen die Tellerfederzentrierbolzen neben der Zentrierfunktion für die Tellerfeder eine Stützkraftfunktion für die Tellerfeder, d.h. stützen die Tellerfeder durch den kupplungsdeckelseitigen Drahtring im unbetätigten Zustand der Tellerfeder zum Kupplungsdeckel und durch den anpressplattenseitigen Drahtring im betätigten Zustand der Tellerfeder zur Anpressplatte hin ab.

In der DE 43 11 908 A1 erscheint es als nachteilig, dass zum Einleiten der Stützkraft in die Tellerfeder zusätzliche Bauteile in Form von zwei Drahtringen erforderlich sind.

Es ist Aufgabe der vorliegenden Erfindung, eine Reibungskupplung anzugeben, bei der die Anzahl der benötigten Bauteile verringert werden kann, ohne dass es zu Beeinträchtigungen während der Betätigung der Reibungskupplung kommt.

Erfindungsgemäß gelöst wird diese Aufgabe durch eine Reibungskupplung für einen Antriebsstrang eines Kraftfahrzeugs gemäß Patentanspruch 1 mit zumindest einer Gegendruckplatte, mit zumindest einem mit der Gegendruckplatte verbundenen Kupplungsdeckel und mit zumindest einer bezüglich der Gegendruckplatte in axialer Richtung der Reibungskupplung begrenzt verlagerbaren Anpressplatte zur reibschlüssigen Klemmung einer Kupplungsscheibe zwischen der Gegendruckplatte und der Anpressplatte, wobei am Kupplungsdeckel in Umfangsrichtung der Reibungskupplung verteilt angeordnete Tellerfederzentriereinrichtungen vorgesehen sind, durch die eine Tellerfeder, die in axialer Richtung zwischen der Anpressplatte und dem Kupplungsdeckel angeordnet ist, bezüglich einer Drehachse der Reibungskupplung in einer zentrierten Lage gehalten ist, und an denen Blattfedern vorgesehen sind, durch die die Anpressplatte drehfest und in axialer Richtung begrenzt verlagerbar am Kupplungsdeckel angebunden ist, und wobei die Tellerfeder einen Kraftrand aufweist, der in radialer Richtung der Reibungskupplung über eine außerhalb der Tellerfederzentriereinrichtungen angeordnete Schwenklagerung verkippbar am Kupplungsdeckel abgestützt ist und in radialer Richtung au-ßerhalb der Schwenklagerung auf die Anpressplatte einwirkt, um bei unbetätigter Tellerfeder die Anpressplatte zur reibschlüssigen Klemmung der Kupplungsscheibe in Richtung der Gegendruckplatte zu verlagern.

Um bei der Betätigung der Tellerfeder, insbesondere im Überweg der Tellerfeder, d.h. wenn die Tellerfeder über den maximalen Ausrückweg hinaus bewegt wird, die Funktionsfähigkeit der Reibungskupplung sicherzustellen, und um im Überweg insbesondere eine Bewegung der Anpressplatte in Richtung der Kupplungsscheibe und ggf. ein ungewolltes Schließen der Reibungskupplung zu verhindern, bilden die Blattfedern und/oder die Befestigung der Blattfedern an der Anpressplatte im betätigten Zustand der Tellerfeder einen Anschlag für die Tellerfeder, den die Tellerfeder berührt, insbesondere zumindest eine der Tellerfederzungen berührt, bevor der Kraftrand der Tellerfeder in radialer Richtung außerhalb der Schwenklagerung eine Innenseite des Kupplungsdeckels berührt.

Somit wird verhindert, dass die Tellerfeder bei einer Betätigung über den maximalen Ausrückweg hinaus im Überweg in einen kritischen Bereich des Überwegs verlagert wird, in dem die durch die Blattfedern über die Anpressplatte in die Tellerfeder eingeleitete Stützkraft nicht ausreicht, um die Tellerfeder in axialer Richtung der Reibungskupplung in Position zu halten. Je nach Position des Anschlags an den Blattfedern und/oder an der Befestigung der Blattfedern an der Anpressplatte kann der Anschlag darüber hinaus dazu genutzt werden, durch Einleiten einer zusätzlichen axialen Kraftkomponente in Richtung der Kupplungsscheibe und in radialer Richtung innerhalb der Schwenklagerung die in radialer Richtung außerhalb der Schwenklagerung in die Tellerfeder eingeleitete Stützkraft zu erhöhen. In jedem Fall ist es durch den Anschlag möglich, den Überweg der Tellerfeder bei Überschreiten des maximalen Ausrückwegs auf ein für die Funktion der Reibungskupplung nicht kritisches Maß zu begrenzen.

Bevorzugte Ausführungsbeispiele der vorliegenden Erfindung sind in den abhängigen Ansprüchen dargelegt.

Gemäß einem bevorzugten Ausführungsbeispiel weist die Anpressplatte einen Nockenabschnitt auf, der in radialer Richtung außerhalb der Anbindung der Blattfedern an der Anpressplatte angeordnet ist und an dem der Kraftrand der Tellerfeder anliegt. Die Blattfedern sind in Umfangsrichtung voneinander beabstandet an der Anpressplatte, in radialer Richtung innerhalb des Nockenabschnitts, angebunden. Die Anbindung erfolgt vorzugsweise durch Vernieten der Blattfedern mit der Anpressplatte, kann aber auch durch Verschrauben oder Verstemmen erfolgen.

Der anpressplattenseitige Nockenabschnitt kann als geschlossener oder als ein an einer oder mehreren Stellen unterbrochener Nockenring ausgebildet sein. Ebenso ist es möglich, dass der Nockenabschnitt mehrere in Umfangsrichtung voneinander beabstandete und sich in axialer Richtung erstreckende Nockenstifte aufweist. Die Oberfläche des Nockenabschnitts, die der Tellerfeder zugewandt ist und an der der Kraftrand der Tellerfeder anliegt, kann flach ausgebildet sein, ist vorzugsweise jedoch verrundet ausgebildet, um die Verkippung der Tellerfeder zu unterstützen bzw. die Reibung zwischen dem Kraftrand der Tellerfeder und der Oberfläche des Nockenabschnitts zu verringern.

Gemäß einem weiteren bevorzugten Ausführungsbeispiel weisen die Blattfedern in Umfangsrichtung im Wesentlichen die Form eines Kreisbogenabschnitts auf. Es ist möglich, die kreisbogenabschnittförmigen Blattfedern konzentrisch zur Drehachse der Reibungskupplung anzubinden. Jedoch ist es auch möglich, dass die Befestigungspunkte der Blattfedern an der Anpressplatte und die Befestigungspunkte der Blattfedern am Kupplungsdeckel bzw. an den kupplungsdeckelseitigen Tellerfederzentriereinrichtungen auf unterschiedlichen Durchmessern angeordnet sind. In diesem Fall ist es möglich, dass sich die anpressplattenseitigen und die kupplungsdeckelseitigen Enden benachbarter Blattfedern in radialer Richtung betrachtet teilweise überlappen.

Vorzugsweise sind die Blattfedern derart angeordnet, dass sie bei Schubbetrieb des Antriebsstrangs anpresskrafterhöhend sind. Von der Getriebeseite aus betrachtet dreht sich die Kurbelwelle eines Verbrennungsmotors des Kraftfahrzeugs gegen den Uhrzeigersinn, wodurch sich auch die Reibungskupplung von der Getriebeseite aus betrachtet gegen den Uhrzeigersinn dreht. Um die Anpresskraft der Anpressplatte zu erhöhen, ist jede Blattfeder so angeordnet, dass sie von der Getriebeseite aus betrachtet gegen den Uhrzeigersinn vom Kupplungsdeckel zur Anpressplatte hin abfällt, d.h. dass das kupplungsdeckelseitige Ende jeder Blattfeder entgegen dem Uhrzeigersinn vor dem anpressplattenseitigen Ende der entsprechenden Blattfeder angeordnet ist.

Insbesondere ist es von Vorteil, wenn die Blattfedern auf einem ersten Durchmesser an den Tellerfederzentriereinrichtungen angebunden sind und auf einem zweiten Durchmesser, der größer als der erste Durchmesser ist, an der Anpressplatte angebunden sind. Somit sind die Blattfedern nicht konzentrisch zur Drehachse der Reibungskupplung angeordnet, wodurch sich die Enden benachbarter Blattfedern in radialer Richtung betrachtet teilweise überlappen können, was die Möglichkeit eröffnet, die Länge der Blattfedern zu vergrößern.

Gemäß einem weiteren bevorzugten Ausführungsbeispiel wird eine Stützkraft der Reibungskupplung ausschließlich durch die Blattfedern aufgebracht und über die Anpressplatte in den Kraftrand der Tellerfeder eingeleitet. Hierzu ist es von Vorteil, wenn die Kraft der Blattfedern erhöht wird, beispielsweise indem mehrlagige Blattfedern oder besonders dicke einzelne Blattfedern verwendet werden.

Weiterhin ist es von Vorteil, wenn die Tellerfeder zumindest im unbetätigten Zustand im Bereich der Tellerfederzentriereinrichtungen in axialer Richtung ungelagert ist. Insbesondere sind in diesem Bereich keine die Tellerfeder abstützenden Drahtringe oder Stützfedern vorgesehen. Dies betrifft insbesondere den Bereich zwischen der Anpressplatte und der Oberfläche der Tellerfeder, die der Anpressplatte zugewandt ist.

Vorzugsweise sind die Tellerfederzentriereinrichtungen als Tellerfederzentrierbolzen ausgebildet. Jeder Tellerfederzentrierbolzen weist vorzugsweise einen ersten Bolzenkopf, durch den der Tellerfederzentrierbolzen mit dem Kupplungsdeckel verbunden ist, und einen zweiten Bolzenkopf auf, durch den der Tellerfederzentrierbolzen mit zumindest einer der Blattfedern verbunden ist. Ferner weist jeder Tellerfederzentrierbolzen einen in axialer Richtung zwischen dem ersten und zweiten Bolzenkopf angeordneten Zentrierabschnitt auf, durch den die Tellerfeder bezüglich der Drehachse der Reibungskupplung in der zentrierten Lage gehalten ist. Vorzugsweise ist der Zentrierabschnitt bauchförmig ausgebildet, d.h. weist einen größeren Durchmesser auf als die beiden Bolzenköpfe. Der Zentrierabschnitt erstreckt sich in axialer Richtung zwischen zwei benachbarten Tellerfederzungen, zwischen denen ein Tellerfederfenster angeordnet ist. Die Tellerfederzungen erstrecken sich in radialer Richtung nach außen in den Kraftrand der Tellerfeder hinein.

Gemäß einem weiteren bevorzugten Ausführungsbeispiel ist die Schwenklagerung in radialer Richtung zumindest teilweise außerhalb der Blattfedern angeordnet. Dies ermöglicht einen besonders kompakten Aufbau der Reibungskupplung.

Insbesondere ist es von Vorteil, wenn die Schwenklagerung am Kupplungsdeckel ausgebildet ist. Vorzugsweise ist die Schwenklagerung als eine umlaufende Sicke oder mehrere in Umfangsrichtung voneinander beabstandete Sicken ausgebildet. Die Schwenklagerung ist in radialer Richtung zwischen den anpressplattenseitigen Nockenabschnitten und den kupplungsdeckelseitigen Tellerfederzentriereinrichtungen angeordnet.

Weiterhin ist es von Vorteil, wenn die Anpressplatte als zumindest zweiteiliges Blechbauteil ausgebildet ist und zum Einen eine Reibplatte zur Anlage an die Kupplungsscheibe und zum Anderen einen den Nockenabschnitt aufweisenden Nockenring aufweist, an dem der Kraftrand der Tellerfeder anliegt. Der Nockenring kann fest mit der Reibplatte, vorzugsweise kraftschlüssig und/oder formschlüssig und/oder stoffschlüssig, verbunden sein. Da die komplette Stützkraft der Reibungskupplung durch die Blattfedern aufgebracht wird und über die Anpressplatte in den Kraftrand der Tellerfeder eingeleitet wird, genauer gesagt über die Reibplatte in den Nockenring und vom Nockenring in den Kraftrand der Tellerfeder eingeleitet wird, ist es auch möglich, den Nockenring und die Reibplatte lose zusammenzufügen, sodass die Sicherung dieser losen Verbindung durch die Stützkraft der Blattfedern erfolgen kann. Hierzu ist es beispielsweise möglich, die Reibplatte auf ihrer der Kupplungsscheibe abgewandten Oberfläche mit einer ringförmigen Nut zu versehen, in die der Nockenring lose eingesteckt ist. Ggf. kann der Nockenring kraftschlüssig und/oder formschlüssig und/oder stoffschlüssig gesichert werden, um ein Herausfallen bei der Montage der Reibungskupplung zu verhindern.

Die vorliegende Erfindung wird nachfolgend anhand von bevorzugten Ausführungsbeispielen in Verbindung mit den zugehörigen Figuren näher erläutert. In diesen zeigen:
- Figur 1: eine Schnittansicht einer Reibungskupplung mit einer Gegendruckplatte, einer mit der Gegendruckplatte verbundenen Druckplattenbaugruppe und einer zwischen der Anpressplatte der Druckplattenbaugruppe und der Gegendruckplatte angeordneten Kupplungsscheibe,
- Figur 2: eine perspektivische Schnittansicht der Druckplattenbaugruppe aus Figur 1, und
- Figur 3: eine perspektivische Ansicht eines Zusammenbaus der Anpressplatte aus den Figuren 1 und 2.

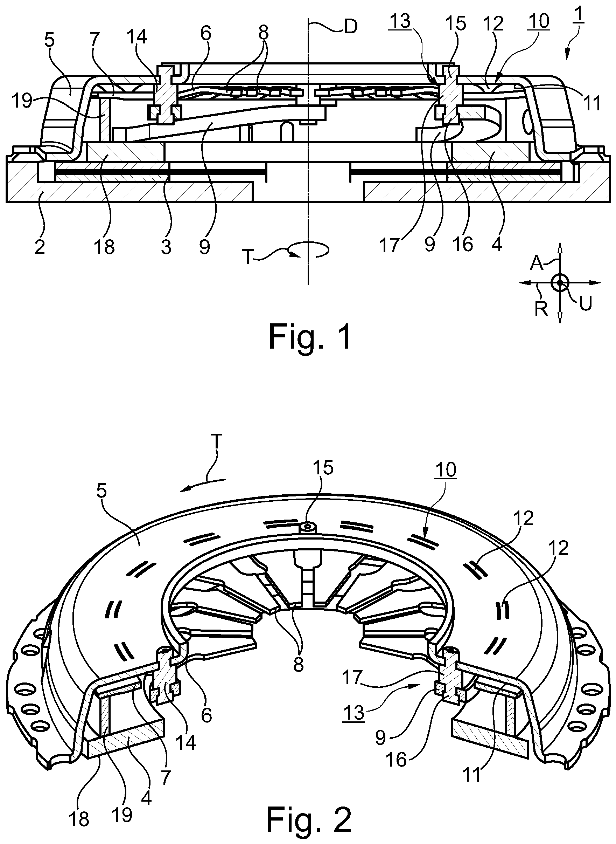

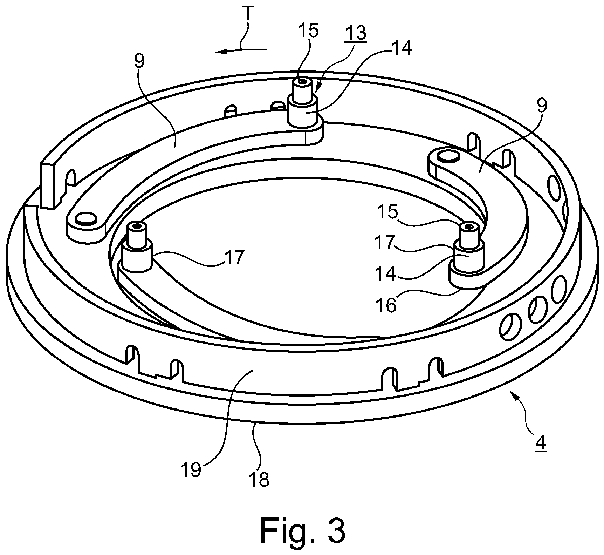

Die Figuren 1 bis 3 betreffen bevorzugte Ausführungsbeispiele einer Reibungskupplung 1 bzw. einer Druckplattenbaugruppe mit einer darin enthaltenen Anpressplatte 4 für einen Antriebsstrang eines Kraftfahrzeugs. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Reibungskupplung 1 bzw. der Druckplattenbaugruppe, die Teilkombinationen der im Folgenden zu erläuternden Merkmale aufweisen.

Die Reibungskupplung 1 ist drehbar bezüglich einer Drehachse D angeordnet. Neben der Anpressplatte 4 weist die Reibungskupplung 1 zumindest eine Gegendruckplatte 2 und zumindest eine in axialer Richtung A der Reibungskupplung 1 zwischen der Anpressplatte 4 und der Gegendruckplatte 2 angeordnete Kupplungsscheibe 3 auf. Die Gegendruckplatte 2 ist mit einem oder mehreren Gehäusebauteilen, insbesondere einem Kupplungsdeckel 5, fest verbunden, insbesondere verschraubt. Die Anpressplatte 4 ist bezüglich der Gegendruckplatte 2 und bezüglich des Kupplungsdeckels 5 drehfest gelagert und in axialer Richtung A begrenzt verlagerbar.

Am Kupplungsdeckel 5 sind in Umfangsrichtung U der Reibungskupplung 1 verteilt angeordnete Tellerfederzentriereinrichtungen 13 vorgesehen. Die Tellerfederzentriereinrichtungen 13 sind vorzugsweise als Tellerfederzentrierbolzen 14 ausgebildet, durch die eine Tellerfeder 6, die in axialer Richtung A zwischen der Anpressplatte 4 und dem Kupplungsdeckel 5 angeordnet ist, bezüglich der Drehachse D der Reibungskupplung 1 in einer zentrierten Lage gehalten ist.

Jeder der Tellerfederzentrierbolzen 14 weist einen ersten Bolzenkopf 15, einen zweiten Bolzenkopf 16 und einen in axialer Richtung A zwischen dem ersten und zweiten Bolzenkopf 15, 16 angeordneten Zentrierabschnitt 17 auf. Durch den ersten Bolzenkopf 15 ist der Tellerfederzentrierbolzen 14 mit dem Kupplungsdeckel 5 verbunden. Durch den zweiten Bolzenkopf 16 ist der Tellerfederzentrierbolzen 14 mit zumindest einer Blattfeder 9 der Reibungskupplung 1 verbunden. Der Zentrierabschnitt 17 des Tellerfederzentrierbolzens 14 ist bauchförmig ausgebildet, d.h. weist einen Durchmesser auf, der größer als der Durchmesser der beiden Bolzenköpfe 15, 16 ist. Durch den Zentrierabschnitt 17 ist die Tellerfeder 6 bezüglich der Drehachse D der Reibungskupplung 1 in der zentrierten Lage gehalten.

Die Tellerfeder 6 weist in ihrem Außenbereich einen umlaufenden Kraftrand 7 auf. Ausgehend vom Kraftrand 7 erstrecken sich in radialer Richtung R der Reibungskupplung 1 Tellerfederzungen 8 nach innen. Benachbarte Tellerfederzungen 8 sind durch einen Spalt voneinander beabstandet, der sich in radialer Richtung R nach außen, d.h. zu Kraftrand 7 hin, in ein Tellerfederfenster erweitert, durch das sich der Tellerfederzentrierbolzen 18 in axialer Richtung A erstreckt, um die Tellerfeder 6 bezüglich der Drehachse D der Reibungskupplung 1 zu zentrieren. Auf die freien Enden der Tellerfederzungen 8 wirkt ein Betätigungssystem, beispielsweise ein konzentrischer Nehmerzylinder, ein, um die Reibungskupplung 1 ein- und/oder auszurücken.

Durch die in Umfangsrichtung U verteilt angeordneten Blattfedern 9 ist die Anpressplatte 4 drehfest und in axialer Richtung A begrenzt verlagerbar am Kupplungsdeckel 5 angebunden. Die Blattfedern 9 sind ausgebildet, die Anpressplatte 4 von der Kupplungsscheibe 3 in axialer Richtung A wegzubewegen, d.h. den Reibschluss zwischen der Gegendruckplatte 2 und der Kupplungsscheibe 3 bzw. zwischen der Kupplungsscheibe 3 und der Anpressplatte 4 aufzuheben, um die Reibungskupplung 1 auszurücken. Die Blattfedern 9 weisen in Umfangsrichtung U die Form von Kreisbogenabschnitten auf, wobei diese nicht konzentrisch bezüglich der Drehachse D der Reibungskupplung 1 angeordnet sind. Vielmehr sind die Blattfedern 9 auf einem ersten Durchmesser an den zweiten Bolzenköpfen 16 der Tellerfederzentrierbolzen 14 angebunden und auf einem zweiten Durchmesser, der vom ersten Durchmesser verschieden ist, an der Anpressplatte 4 angebunden. Im dargestellten Ausführungsbeispiel ist der zweite Durchmesser größer als der erste Durchmesser. Darüber hinaus sind die Blattfedern 9 derart angeordnet, dass sie im Schubbetrieb des Antriebsstrangs anpresskrafterhöhend sind.

Wenn die Reibungskupplung 1 im Antriebsstrang eines Kraftfahrzeuges eingebaut ist, weist die Reibungskupplung 1 eine Drehrichtung T auf, die von der Getriebeseite aus betrachtet entgegen dem Uhrzeigersinn gerichtet ist. Für die Blattfedern 9 bedeutet die im Schubbetrieb des Antriebsstrangs anpresskrafterhöhende Anordnung, dass ein erstes Ende jeder Blattfeder 9 mit dem Tellerfederzentrierbolzen 14 verbunden ist und ein entgegen dem Uhrzeigersinn angeordnetes zweites Ende derselben Blattfeder 9 mit der Anpressplatte 4 verbunden ist, d.h. mit Bezug auf Figur 1, dass die Blattfedern 9 eine entgegen dem Uhrzeigersinn abfallende Ausrichtung aufweisen.

Die Anpressplatte 4 weist einen Nockenabschnitt auf, der in radialer Richtung R außerhalb der Anbindung der Blattfedern 9 an der Anpressplatte angeordnet ist und an dem der Kraftrand 7 der Tellerfeder 6 anliegt. Im dargestellten Ausführungsbeispiel ist die Anpressplatte 4 als zweiteiliges Blechbauteil ausgebildet, das eine Reibplatte 18 und einen Nockenring 19 aufweist. Die Reibplatte 18 ist zur Anlage an der Kupplungsscheibe 3 ausgebildet, um die Kupplungsscheibe 3 reibschlüssig zwischen der Reibplatte 18 der Anpressplatte 4 und der Gegendruckplatte 2 zu klemmen. Der Nockenring 19 ist im dargestellten Ausführungsbeispiel als offener Nockenring 19 ausgebildet, kann jedoch auch als geschlossener Nockenring 19 ausgebildet sein. An einer der Tellerfeder 6 zugewandten Oberfläche des Nockenrings 19 liegt der Kraftrand 7 der Tellerfeder 6 an.

Eine Stützkraft der Reibungskupplung 1 wird ausschließlich durch die Blattfedern 9 aufgebracht und über die Anpressplatte 4, genauer gesagt über die mit den anpressplattenseitigen Enden der Blattfedern 9 verbundene Reibplatte 18 in den Nockenring 19 und vom Nockenring 19 in den Kraftrand 7 der Tellerfeder 6 eingeleitet. Dadurch ist es nicht mehr erforderlich, dass der Nockenring 19 fest mit der Reibplatte 18, beispielsweise mittels einer kraftschlüssigen und/oder formschlüssigen und/oder stoffschlüssigen Anbindung, verbunden ist, sondern es ist ausreichend, wenn der Nockenring 19 lose mit der Reibplatte 18 verbunden ist. Im dargestellten Ausführungsbeispiel ist hierzu eine ringförmige Nut auf der der Kupplungsscheibe 3 abgewandten Oberfläche der Reibplatte 18 in die Reibplatte 18 eingebracht, in die der Nockenring 19 lose eingelegt ist. Die Sicherung in axialer Richtung erfolgt durch die Stützkraft der Blattfedern.

Die Tellerfeder 6 ist zumindest im unbetätigten Zustand der Reibungskupplung 1 im Bereich der Tellerfederzentriereinrichtungen 13, d.h. im Bereich der Zentrierabschnitte 17 der Tellerfederzentrierbolzen 14, in axialer Richtung A ungelagert. Dies bedeutet, dass die Tellerfeder 6 in diesem Bereich lediglich bezüglich der Drehachse D der Reibungskupplung 1 zentriert ist, in diesem Bereich jedoch keine Axialkräfte auf die Tellerfeder 6 übertragen werden können bzw. in diesem Bereich die Tellerfeder 6 keine Axialkräfte auf benachbarte Bauteile übertragen kann.

Ferner ist die Tellerfeder 6 über eine in radialer Richtung R außerhalb der Tellerfederzentrierbolzen 14 angeordnete Schwenklagerung 10 verkippbar am Kupplungsdeckel 5 abgestützt. In radialer Richtung R außerhalb der Schwenklagerung 10 wirkt die Tellerfeder 6, genauer gesagt der Kraftrand 7 der Tellerfeder 6, auf den Nockenring 19 ein, um bei unbetätigter Tellerfeder 6 die Anpressplatte 4 zur reibschlüssigen Klemmung der Kupplungsscheibe 3 entgegen der in Ausrückrichtung wirkenden Stützkraft der Blattfedern 9 in Richtung der Gegendruckplatte 2 zu verlagern. Somit ist die Reibungskupplung 1 vorzugsweise als normal-eingerückte Reibungskupplung 1 ausgebildet.

Wenn die Tellerfeder 6 durch das Betätigungssystem, beispielsweise durch den konzentrischen Nehmerzylinder betätigt wird, verringert sich während der Verkippung der Tellerfeder 6 die auf die Anpressplatte 4 ausgeübte Tellerfederkraft, sodass die Blattfedern 9 die Anpressplatte 4 in Ausrückrichtung verlagern können, um die reibschlüssige Klemmung der Kupplungsscheibe aufzuheben.

Die Schwenklagerung 10 ist in radialer Richtung R zumindest teilweise außerhalb der Blattfedern 9 angeordnet. Im dargestellten Ausführungsbeispiel ist die Schwenklagerung 10 am Kupplungsdeckel 5 ausgebildet und weist mehrere in Umfangsrichtung U voneinander beabstandete Sicken 12 auf, die in axialer Richtung A in Richtung der Tellerfeder von einer Innenseite 11 des Kupplungsdeckels 5 in Richtung der Tellerfeder 6 vorspringen, um die Tellerfeder 6 im Bereich ihres Kraftrands 7 verkippbar abzustützen. Anstelle der in Umfangsrichtung U voneinander beabstandeten Sicken 12 ist auch eine einzige umlaufende Sicke denkbar.

Die Blattfedern 9 und/oder die Befestigung der Blattfedern 9 an der Anpressplatte 4 bilden im betätigten Zustand der Tellerfeder 6 einen Anschlag für die Tellerfeder 6, den zumindest eine Tellerfederzunge 8 der Tellerfeder 6 berührt, bevor der Kraftrand 7 der Tellerfeder 6 in radialer Richtung R außerhalb der Schwenklagerung 10 die Innenseite 11 des Kupplungsdeckels 5 berührt. Dadurch ist es möglich, bei Überschreiten des maximalen Ausrückwegs der Tellerfeder 6 einen gewissen Überweg der Tellerfeder 6 zu ermöglichen, gleichzeitig jedoch zu verhindern, dass die Tellerfeder 6 so weit in den Überweg bewegt wird, dass die Stützkraft der Blattfedern nicht mehr ausreicht, um die Tellerfeder 6 abzustützen, wodurch sich die Anpressplatte 4 im Überweg in Richtung der Kupplungsscheibe 3 bewegen würde, um die Reibungskupplung 1 ungewollt zu schließen.

Die vorangegangenen Ausführungsbeispiele betreffen eine Reibungskupplung 1 für einen Antriebsstrang eines Kraftfahrzeugs mit zumindest einer Gegendruckplatte 2, mit zumindest einem mit der Gegendruckplatte 2 verbundenen Kupplungsdeckel 5, und mit zumindest einer bezüglich der Gegendruckplatte 2 in axialer Richtung A der Reibungskupplung 1 begrenzt verlagerbaren Anpressplatte 4 zur reibschlüssigen Klemmung einer Kupplungsscheibe 3 zwischen der Gegendruckplatte 2 und der Anpressplatte 4, wobei am Kupplungsdeckel 5 in Umfangsrichtung U der Reibungskupplung 1 verteilt angeordnete Tellerfederzentriereinrichtungen 13 vorgesehen sind, durch die eine Tellerfeder 6, die in axialer Richtung A zwischen der Anpressplatte 4 und dem Kupplungsdeckel 5 angeordnet ist, bezüglich einer Drehachse D der Reibungskupplung 1 in einer zentrierten Lage gehalten ist, und an denen Blattfedern 9 vorgesehen sind, durch die die Anpressplatte 4 drehfest und in axialer Richtung A begrenzt verlagerbar am Kupplungsdeckel 5 angebunden ist, und wobei die Tellerfeder 6 einen Kraftrand 7 aufweist, der in radialer Richtung R der Reibungskupplung 1 über eine außerhalb der Tellerfederzentriereinrichtungen 13 angeordnete Schwenklagerung 10 verkippbar am Kupplungsdeckel 5 abgestützt ist und in radialer Richtung R außerhalb der Schwenklagerung 10 auf die Anpressplatte 4 einwirkt, um bei unbetätigter Tellerfeder 6 die Anpressplatte 4 zur reibschlüssigen Klemmung der Kupplungsscheibe 3 in Richtung der Gegendruckplatte 2 zu verlagern, wobei die Blattfedern 9 und/oder die Befestigung der Blattfedern 9 an der Anpressplatte 4 im betätigten Zustand der Tellerfeder 6 einen Anschlag für die Tellerfeder 6 bilden, den die Tellerfeder 6 berührt, bevor der Kraftrand 7 der Tellerfeder 6 in radialer Richtung R außerhalb der Schwenklagerung 10 eine Innenseite 11 des Kupplungsdeckels 5 berührt.

### Bezugszeichenliste

- 1: Reibungskupplung
- 2: Gegendruckplatte
- 3: Kupplungsscheibe
- 4: Anpressplatte
- 5: Kupplungsdeckel
- 6: Tellerfeder
- 7: Kraftrand
- 8: Tellerfederzunge
- 9: Blattfeder
- 10: Schwenklagerung
- 11: Innenseite
- 12: Sicke
- 13: Tellerfederzentriereinrichtung
- 14: Tellerfederzentrierbolzen
- 15: erster Bolzenkopf
- 16: zweiter Bolzenkopf
- 17: Zentrierabschnitt
- 18: Reibplatte
- 19: Nockenring
- A: axiale Richtung
- D: Drehachse
- R: radiale Richtung
- U: Umfangsrichtung
- T: Drehrichtung

## Patentansprüche

1. Reibungskupplung (1) für einen Antriebsstrang eines Kraftfahrzeugs mit zumindest einer Gegendruckplatte (2), mit zumindest einem mit der Gegendruckplatte (2) verbundenen Kupplungsdeckel (5), und mit zumindest einer bezüglich der Gegendruckplatte (2) in axialer Richtung (A) der Reibungskupplung (1) begrenzt verlagerbaren Anpressplatte (4) zur reibschlüssigen Klemmung einer Kupplungsscheibe (3) zwischen der Gegendruckplatte (2) und der Anpressplatte (4), wobei am Kupplungsdeckel (5) in Umfangsrichtung (U) der Reibungskupplung (1) verteilt angeordnete Tellerfederzentriereinrichtungen (13) vorgesehen sind, durch die eine Tellerfeder (6), die in axialer Richtung (A) zwischen der Anpressplatte (4) und dem Kupplungsdeckel (5) angeordnet ist, bezüglich einer Drehachse (D) der Reibungskupplung (1) in einer zentrierten Lage gehalten ist, und an denen Blattfedern (9) vorgesehen sind, durch die die Anpressplatte (4) drehfest und in axialer Richtung (A) begrenzt verlagerbar am Kupplungsdeckel (5) angebunden ist, und wobei die Tellerfeder (6) einen Kraftrand (7) aufweist, der in radialer Richtung (R) der Reibungskupplung (1) über eine außerhalb der Tellerfederzentriereinrichtungen (13) angeordnete Schwenklagerung (10) verkippbar am Kupplungsdeckel (5) abgestützt ist und in radialer Richtung (R) außerhalb der Schwenklagerung (10) auf die Anpressplatte (4) einwirkt, um bei unbetätigter Tellerfeder (6) die Anpressplatte (4) zur reibschlüssigen Klemmung der Kupplungsscheibe (3) in Richtung der Gegendruckplatte (2) zu verlagern, **dadurch gekennzeichnet, dass** die Blattfedern (9) und/oder die Befestigung der Blattfedern (9) an der Anpressplatte (4) im betätigten Zustand der Tellerfeder (6) einen Anschlag für die Tellerfeder (6) bilden, den die Tellerfeder (6) berührt, bevor der Kraftrand (7) der Tellerfeder (6) in radialer Richtung (R) au-ßerhalb der Schwenklagerung (10) eine Innenseite (11) des Kupplungsdeckels (5) berührt.

2. Reibungskupplung (1) nach Anspruch 1, wobei die Anpressplatte (4) einen Nockenabschnitt aufweist, der in radialer Richtung (R) außerhalb der Anbindung der Blattfedern (9) an der Anpressplatte (4) angeordnet ist, und an dem der Kraftrand (7) der Tellerfeder (6) anliegt.

3. Reibungskupplung (1) nach Anspruch 1 oder 2, wobei die Blattfedern (9) in Umfangsrichtung (U) im Wesentlichen die Form eines Kreisbogenabschnitts aufweisen, und vorzugsweise bei Schubbetrieb des Antriebsstrangs anpresskrafterhöhend.

4. Reibungskupplung (1) nach einem der Ansprüche 1 bis 3, wobei die Blattfedern (9) auf einem ersten Durchmesser an den Tellerfederzentriereinrichtungen (13) angebunden sind, und wobei die Blattfedern (9) auf einem zweiten Durchmesser, der größer als der erste Durchmesser ist, an der Anpressplatte (4) angebunden sind.

5. Reibungskupplung (1) nach einem der Ansprüche 1 bis 4, wobei eine Stützkraft der Reibungskupplung (1) ausschließlich durch die Blattfedern (9) aufgebracht wird und über die Anpressplatte (4) in den Kraftrand (7) der Tellerfeder (6) eingeleitet wird.

6. Reibungskupplung (1) nach einem der Ansprüche 1 bis 5, wobei die Tellerfeder (6) zumindest im unbetätigten Zustand im Bereich der Tellerfederzentriereinrichtungen (13) in axialer Richtung (A) ungelagert ist.

7. Reibungskupplung (1) nach einem der Ansprüche 1 bis 6, wobei die Tellerfederzentriereinrichtungen (13) als Tellerfederzentrierbolzen (14) ausgebildet sind, wobei jeder Tellerfederzentrierbolzen (14) vorzugsweise einen ersten Bolzenkopf (15), durch den der Tellerfederzentrierbolzen (14) mit dem Kupplungsdeckel (5) verbunden ist, einen zweiten Bolzenkopf (16), durch den der Tellerfederzentrierbolzen (14) mit zumindest einer der Blattfedern (9) verbunden ist, und einen in axialer Richtung (A) zwischen dem ersten und zweiten Bolzenkopf (15, 16) angeordneten, vorzugsweise bauchförmigen, Zentrierabschnitt (17) aufweist, durch den die Tellerfeder (6) bezüglich der Drehachse (D) der Reibungskupplung (1) in der zentrierten Lage gehalten ist.

8. Reibungskupplung (1) nach einem der Ansprüche 1 bis 7, wobei die Schwenklagerung (10) in radialer Richtung (R) zumindest teilweise außerhalb der Blattfedern (9) angeordnet ist.

9. Reibungskupplung (1) nach einem der Ansprüche 1 bis 8, wobei die Schwenklagerung (10) am Kupplungsdeckel (5), vorzugsweise als eine umlaufende Sicke oder mehrere, in Umfangsrichtung (U) voneinander beabstandete Sicken (12), ausgebildet ist.

10. Reibungskupplung (1) nach Anspruch 9, wobei die Anpressplatte (4) als zumindest zweiteiliges Blechbauteil ausgebildet ist und zum Einen eine Reibplatte (18) zur Anlage an die Kupplungsscheibe (3) und zum Anderen einen den Nockenabschnitt aufweisenden Nockenring (19) aufweist, an dem der Kraftrand (7) der Tellerfeder (6) anliegt, und der vorzugsweise in die Reibplatte (18) eingesteckt ist.

## Claims

1. Friction clutch (1) for a drive train of a motor vehicle having at least one counterpressure plate (2), having at least one clutch cover (5) which is connected to the counterpressure plate (2), and having at least one pressing plate (4) which can be moved to a limited extent in the axial direction (A) of the friction clutch (1) with regard to the counterpressure plate (2) in order to clamp a clutch disc (3) in a frictionally locking manner between the counterpressure plate (2) and the pressing plate (4), cup spring centring devices (13) being provided which are arranged on the clutch cover (5) such that they are distributed in the circumferential direction (U) of the friction clutch (1), by way of which cup spring centring devices (13) a cup spring (6) which is arranged in the axial direction (A) between the pressing plate (4) and the clutch cover (5) is held in a centred position with regard to a rotational axis (D) of the friction clutch (1), and on which cup spring centring devices (13) leaf springs (9) are provided, by way of which the pressing plate (4) is attached on the clutch cover (5) fixedly so as to rotate with it and such that it can be moved to a limited extent in the axial direction (A), and the cup spring (6) having a force edge (7) which is supported on the clutch cover (5) such that it can be tilted in the radial direction (R) of the friction clutch (1) via a pivot bearing (10) which is arranged outside the cup spring centring devices (13), and acts on the pressing plate (4) outside the pivot bearing (10) in the radial direction (R), in order, in the case of a non-actuated cup spring (6), to move the pressing plate (4) in the direction of the counterpressure plate (2) for frictionally locking clamping of the clutch disc (3), **characterized in that** the leaf springs (9) and/or the fastening of the leaf springs (9) to the pressing plate (4) forms/form a stop for the cup spring (6) in the actuated state of the cup spring (6), which stop is contacted by the cup spring (6) before the force edge (7) of the cup spring (6) contacts an inner side (11) of the clutch cover (5) outside the pivot bearing (10) in the radial direction (R).

2. Friction clutch (1) according to Claim 1, the pressing plate (4) having a cam section which is arranged in the radial direction (R) outside the attachment of the leaf springs (9) on the pressing plate (4), and against which cam section the force edge (7) of the cup spring (6) bears.

3. Friction clutch (1) according to Claim 1 or 2, the leaf springs (9) having substantially the shape of a circular arc section in the circumferential direction (U), and preferably so as to increase the pressing force during overrun operation of the drive train.

4. Friction clutch (1) according to one of Claims 1 to 3, the leaf springs (9) being attached to the cup spring centring devices (13) on a first diameter, and the leaf springs (9) being attached to the pressing plate (4) on a second diameter which is greater than the first diameter.

5. Friction clutch (1) according to one of Claims 1 to 4, a supporting force of the friction clutch (1) being applied exclusively by way of the leaf springs (9) and being introduced via the pressing plate (4) into the force edge (7) of the cup spring (6).

6. Friction clutch (1) according to one of Claims 1 to 5, the cup spring (6) being unsupported in the axial direction (A) in the region of the cup spring centring devices (13) at least in the non-actuated state.

7. Friction clutch (1) according to one of Claims 1 to 6, the cup spring centring devices (13) being configured as cup spring centring bolts (14), each cup spring centring bolt (14) preferably having a first bolt head (15), by way of which the cup spring centring bolt (14) is connected to the clutch cover (5), a second bolt head (16), by way of which the cup spring centring bolt (14) is connected to at least one of the leaf springs (9), and a preferably bulged centring section (17) which is arranged between the first and second bolt head (15, 16) in the axial direction (A) and by way of which the cup spring (6) is held in the centred position with regard to the rotational axis (D) of the friction clutch (1).

8. Friction clutch (1) according to one of Claims 1 to 7, the pivot bearing (10) being arranged at least partially outside the leaf springs (9) in the radial direction (R).

9. Friction clutch (1) according to one of Claims 1 to 8, the pivot bearing (10) being configured on the clutch cover (5), preferably as a circumferential bead or a plurality of beads (12) which are spaced apart from one another in the circumferential direction (U).

10. Friction clutch (1) according to Claim 9, the pressing plate (4) being configured as an at least two-piece sheet metal component, and having firstly a friction plate (18) for bearing against the clutch disc (3), and having secondly a cam ring (19) which has the cam section and against which the force edge (7) of the cup spring (6) bears, and which cam ring (19) is preferably plugged into the friction plate (18).

## Revendications

1. Embrayage à friction (1) pour une chaîne cinématique d'un véhicule automobile, comprenant au moins une plaque de pression conjuguée (2), au moins un couvercle d'embrayage (5) connecté à la plaque de pression conjuguée (2) et au moins une plaque de pressage (4) déplaçable de manière limitée par rapport à la plaque de pression conjuguée (2) dans la direction axiale (A) de l'embrayage à friction (1) pour le serrage par engagement par friction d'un disque d'embrayage (3) entre la plaque de pression conjuguée (2) et la plaque de pressage (4), des dispositifs de centrage à ressort à coupelle (13) répartis dans la direction périphérique (U) de l'embrayage à friction (1) étant prévus sur le couvercle d'embrayage (5), par le biais desquels un ressort à coupelle (6) qui est disposé dans la direction axiale (A) entre la plaque de pressage (4) et le couvercle d'embrayage (5) est retenu dans une position centrée par rapport à un axe de rotation (D) de l'embrayage à friction (1) et sur lesquels des ressorts à lame (9) sont prévus, par le biais desquels la plaque de pressage (4) est reliée de manière solidaire en rotation et de manière déplaçable de manière limitée dans la direction axiale (A) au couvercle d'embrayage (5), et le ressort à coupelle (6) présentant un bord de force (7) qui est supporté dans la direction radiale (R) de l'embrayage à friction (1) de manière à pouvoir basculer sur le couvercle d'embrayage (5) par le biais d'un support sur palier pivotant (10) disposé à l'extérieur des dispositifs de centrage de ressort à coupelle (13) et qui agit dans la direction radiale (R) à l'extérieur du support sur palier pivotant (10) sur la plaque de pressage (4) afin de déplacer la plaque de pressage (4), lorsque le ressort à coupelle (6) n'est pas actionné, en vue d'un serrage par engagement par friction du disque d'embrayage (3) dans la direction de la plaque de pression conjuguée (2), **caractérisé en ce que** les ressorts à lame (9) et/ou la fixation des ressorts à lame (9) à la plaque de pressage (4) forment, dans l'état actionné du ressort à coupelle (6), une butée pour le ressort à coupelle (6) avec laquelle le ressort à coupelle (6) vient en contact avant que le bord de force (7) du ressort à coupelle (6) ne vienne en contact dans la direction radiale (R) à l'extérieur du support sur palier pivotant (10) avec un côté intérieur (11) du couvercle d'embrayage (5).

2. Embrayage à friction (1) selon la revendication 1, dans lequel la plaque de pressage (4) présente une portion de came qui est disposée dans la direction radiale (R) à l'extérieur de la liaison des ressorts à lame (9) à la plaque de pressage (4), et au niveau de laquelle s'applique le bord de force (7) du ressort à coupelle (6).

3. Embrayage à friction (1) selon la revendication 1 ou 2, dans lequel les ressorts à lame (9) présentent, dans la direction périphérique (U), essentiellement la forme d'une portion d'arc de cercle, et de manière à augmenter la force de pressage de préférence lors d'un mode de fonctionnement en poussée de la chaîne cinématique.

4. Embrayage à friction (1) selon l'une quelconque des revendications 1 à 3, dans lequel les ressorts à lame (9) sont connectés aux dispositifs de centrage de ressort à coupelle (13) au niveau d'un premier diamètre, et les ressorts à lame (9) sont connectés à la plaque de pressage (4) sur un deuxième diamètre supérieur au premier diamètre.

5. Embrayage à friction (1) selon l'une quelconque des revendications 1 à 4, dans lequel une force de support de l'embrayage à friction (1) est appliquée exclusivement par les ressorts à lame (9) et est introduite par le biais de la plaque de pressage (4) dans le bord de force (7) du ressort à coupelle (6).

6. Embrayage à friction (1) selon l'une quelconque des revendications 1 à 5, dans lequel le ressort à coupelle (6), au moins dans l'état non actionné, n'est pas supporté dans la direction axiale (A) dans la région des dispositifs de centrage de ressort à coupelle (13).

7. Embrayage à friction (1) selon l'une quelconque des revendications 1 à 6, dans lequel les dispositifs de centrage de ressort à coupelle (13) sont réalisés sous forme de boulons de centrage de ressort à coupelle (14), chaque boulon de centrage de ressort à coupelle (14) présentant de préférence une première tête de boulon (15) par laquelle le boulon de centrage de ressort à coupelle (14) est connecté au couvercle d'embrayage (5), une deuxième tête de boulon (16), par laquelle le boulon de centrage de ressort à coupelle (14) est connecté à au moins l'un des ressorts à lame (9), et une portion de centrage (17), de préférence de forme bombée, disposée dans la direction axiale (A) entre la première et la deuxième tête de boulon (15, 16), par laquelle le ressort à coupelle (6) est retenu dans la position centrée par rapport à l'axe de rotation (D) de l'embrayage à friction (1).

8. Embrayage à friction (1) selon l'une quelconque des revendications 1 à 7, dans lequel le support sur palier pivotant (10) est disposé dans la direction radiale (R) au moins en partie à l'extérieur des ressorts à lame (9).

9. Embrayage à friction (1) selon l'une quelconque des revendications 1 à 8, dans lequel le support sur palier pivotant (10) est réalisé au niveau du couvercle d'embrayage (5) de préférence sous la forme d'une moulure périphérique ou de plusieurs moulures (12) espacées les unes des autres dans la direction périphérique (U).

10. Embrayage à friction (1) selon la revendication 9, dans lequel la plaque de pressage (4) est réalisée sous forme de composant en tôle au moins en deux parties et présente d'une part une plaque de friction (18) pour l'application contre le disque d'embrayage (3) et d'autre part une bague de came (19) présentant la portion de came, contre laquelle s'applique le bord de force (7) du ressort à coupelle (6), et qui est de préférence enfichée dans la plaque de friction (18).
